# EUROPÄISCHE PATENTSCHRIFT

(11) **EP 4 414 184 B1**
(45) Veröffentlichungstag und Bekanntmachung des Hinweises auf die Patenterteilung: **17.09.2025**
(21) Anmeldenummer: 24150024.8
(22) Anmeldetag: 02.01.2024
(51) Int. Cl.: B60C 11/24

(54) **VERFAHREN ZUR VERBESSERTEN ABSCHÄTZUNG DER PROFILTIEFE VON FAHRZEUGREIFEN**
METHOD FOR IMPROVED ESTIMATION OF TREAD DEPTH OF VEHICLE TYRES
PROCÉDÉ D'ESTIMATION AMÉLIORÉE DE LA PROFONDEUR DE SCULPTURE DE PNEUS DE VÉHICULE

(30) Priorität: 13.02.2023 DE 102023201171
(43) Veröffentlichungstag der Anmeldung: 14.08.2024
(73) Patentinhaber: Continental Reifen Deutschland GmbH, 30175 Hannover (DE)
(72) Erfinder: Kurz, Martin, 30175 Hannover (DE); Sahlmüller, Baldo, 30175 Hannover (DE); Pietsch, Holger, 30175 Hannover (DE)
(74) Vertreter: Continental Corporation

(56) Entgegenhaltungen:
- EP-A1- 4 124 472
- WO-A1-2020/231430
- WO-A1-2021/225865
- WO-A1-2022/066867
- DE-T2- 602004 010 398
- US-A1- 2017 023 441
- US-A1- 2018 272 813
- US-A1- 2020 130 420

## Beschreibung

Fahrzeugreifen bei einem Fahrzeug sowie ein für die Durchführung des Verfahrens ausgelegtes Fahrzeugsystem.

Die fortschreitende technische Entwicklung und die zunehmende Digitalisierung betreffen insbesondere auch den Bereich der Fahrzeugtechnik und der Fahrzeugreifen. Es besteht ein fortgesetztes Interesse daran, bei den in Fahrzeugen eingesetzten Komponenten kontinuierlich Betriebsdaten zu erfassen, um beispielsweise die Leistungsfähigkeit und Betriebssicherheit kontinuierlich zu überwachen. Eine wichtige Information, die beispielsweise bei Fahrzeugreifen überwacht werden kann, ist dabei die Profiltiefe des Laufstreifens, da dieser Wert regelmäßig gut mit der Haltbarkeit und dem Zustand der Reifen korreliert und beispielsweise dafür genutzt werden kann, den optimalen Wechselzeitpunkt für Reifen zu bestimmen.

Es besteht grundsätzlich ein großes Interesse daran, die Profiltiefe von Reifen im Betrieb individuell für jeden Reifen und möglichst akkurat abschätzen und/oder berechnen zu können, sodass für sämtliche Reifen eines Fahrzeugs jeweils ein präziser individueller Wert über die Profiltiefe des Laufstreifens verfügbar ist, bevorzugt ohne dass der Fahrzeugführer selbst die Profiltiefe bestimmen muss.

Aus dem Stand der Technik sind verschiedene Verfahren zur Abschätzung und/oder Berechnung der Profiltiefe bekannt, die jedoch mit unterschiedlichen Vor- und Nachteilen behaftet sind. Diesbezüglicher

Stand der Technik ist beispielsweise in der CN 112976956 A, der EP 0972658 B1, der US 9340211 B1, der US 2021/0302272 und der DE 102018200358 A offenbart. Weitere Informationen zum technologischen Hintergrund sind beispielsweise in der JP 2022052205 A, der US 7762129 B2, der WO 2015/049418, der WO 2021/108930 A1 und der WO 2021/201095 A1 offenbart.

Aus WO2022/066867 A1 ist ein Verfahren zum Einstellen von indirekt bestimmten Werten eines Reifenüberwachungssystems bekannt. Das Verfahren umfasst die nachfolgenden Schritte: Identifizieren eines indirekt bestimmten Wertes, der einem Reifen zugeordnet ist, durch eine Reifenüberwachungssteuerung; Identifizieren eines oder mehrerer Reifenparameter von einer oder mehreren direkten Messvorrichtungen durch die Reifenüberwachungssteuerung; Verwenden des einen oder der mehreren Reifenparameter von der einen oder den mehreren direkten Messvorrichtungen durch die Reifenüberwachungssteuerung, um den indirekt bestimmten Wert einzustellen; und Verwenden des eingestellten indirekt bestimmten Wertes durch die Reifenüberwachungssteuerung, um indirekt einen Verschleißzustandswert für den Reifen zu bestimmen.

Verfahren zur Abschätzung und/oder Berechnung der Profiltiefe sind vor allem für den Einsatz in der Flottenverwaltung von Nutzfahrzeugen interessant. Gerade Nutzfahrzeuge, beispielsweise LKW, sind regelmäßig auf langen Strecken unterwegs und fahren dabei nicht nur über verschiedene Typen von Straßen, bspw. Autobahnen oder Landstraßen, sondern sind häufig auch länderübergreifend im Einsatz und dabei unterschiedlichsten Belastungen ausgesetzt.

Beispielsweise sind Verfahren bekannt, welche durch eine Messung der Radialbeschleunigung eines Fahrzeugreifens mithilfe eines Beschleunigungssensors am Innerliner dieses Fahrzeugreifens Rückschlüsse auf die Profiltiefe des Laufstreifens des Fahrzeugreifens erlauben. So offenbart die DE 102015216210 A1 beispielsweise ein Verfahren, welches über ein lineares Gleichungssystem eine Berechnung der Profiltiefe aus der Radialbeschleunigung erlaubt. Die EP 2172759 B1 berechnet die Profiltiefe aus dem Minimum bzw. Maximum des zeitlichen Differentials der Radialbeschleunigung innerhalb eines definierten Zeitintervalls, insbesondere innerhalb eines Zeitintervalls, in welchem der Beschleunigungssensor die Radaufstandsfläche durchläuft.

Andere Verfahren setzen auf die Korrelation der beispielsweise mittels GPS-Daten bestimmten Fahrzeuggeschwindigkeit mit der

Umdrehungszahl des Fahrzeugreifens, wobei die Profiltiefe des Fahrzeugreifens aus der Ausgangsprofiltiefe und der Veränderung des dynamischen Rollradius abgeleitet wird, welcher aus der Korrelation der Fahrzeuggeschwindigkeit mit der Umdrehungszahl des Fahrzeugreifens erhalten werden kann.

Diese Verfahren erfordern in den Fahrzeugreifen bzw. in deren Peripherie zumeist eine zusätzliche Sensorik. Durch diese Sensorik steigen jedoch nicht nur die Herstellungskosten der Fahrzeugreifen, sondern eine im Fahrzeugreifen verbaute Sensorik ist in vielen Fällen zudem auch anfällig für Störungen, die durch die im Fahrbetrieb auftretenden starken mechanischen Belastungen verursacht oder begünstigt werden können. Aus diesem Grund verfügen viele der Fahrzeugreifen, welche heute im Gebrauch sind, nicht über weitere Sensorik, die den Einsatz entsprechender Verfahren ermöglichen würde.

Vor diesem Hintergrund wurden datenbasierte Verfahren zur Abschätzung der Profiltiefe von Fahrzeugreifen vorgeschlagen, in denen die Profiltiefe von Fahrzeugreifen ausgehend von Fahrzeugparametern, insbesondere der Fahrzeuggeschwindigkeit bzw. der Beschleunigungswerte des Fahrzeuges, sowie einem Satz von unterschiedlichen Einflussparametern, beispielsweise zur Beschaffenheit des Fahrzeuges, zur Art der Reifen oder zu den herrschenden Umgebungsbedingungen, berechnet wird, wobei die Zahl der in die Berechnung eingehenden Einflussparameter mit dem jeweiligen Anwendungsszenario und der angestrebten Präzision der Berechnung variieren kann.

Während die Verfahren zur Abschätzung der Profiltiefe des Laufstreifens mithilfe von Beschleunigungssensoren bzw. den GPS-Daten in den meisten Fällen eine direkte Abschätzung der absoluten Profiltiefe erlauben oder zumindest eine mit der absoluten Profiltiefe korrelierende Ausgabe erzeugen, ist dies bei den an sich vorteilhaften parameterbasierten Verfahren regelmäßig nicht möglich. Zur Veranschaulichung ist es in den erstgenannten Verfahren bildlich gesprochen möglich, im Stand des Fahrzeuges einen Fahrzeugreifen durch mechanische Bearbeitung eines Großteils seines Profils zu berauben und diese Veränderung später in dem Abschätzungsverfahren zu registrieren, beispielsweise weil sich der Verlauf der zeitabhängigen Radialbeschleunigung bzw. das Verhältnis von Umdrehungszahl von Fahrzeuggeschwindigkeit entsprechend ändern würde.

Im Gegensatz hierzu sind die an sich vorteilhaften parameterbasierten Verfahren jedoch zumeist blind für jede Veränderung des Profilzustandes, welche durch Belastungen verursacht wird, die nicht als Kenngröße in das Berechnungssystem eingegeben werden.

Die Erfinder der vorliegenden Erfindung haben in eigenen Versuchen erkannt, dass ein wesentlicher Beitrag zu der Abweichung einer mit einem parameterbasierten Verfahren erzeugten Zustandsbewertung des Reifenprofils vom tatsächlichen Zustand insbesondere durch Rangiermanöver, wie beispielsweise das Einparken, verursacht wird. Bei diesen Rangiermanövern werden die Fahrzeugreifen im Stand des Fahrzeugs bzw. bei niedrigen Geschwindigkeiten im Zuge von Lenkbewegungen relativ zur häufig rauen Fahrbahnoberfläche bewegt. Die dabei erfahrene mechanische Belastung trägt insbesondere bei schwer beladenen Nutzfahrzeugen spürbar zur Verschlechterung des Profilzustandes bei, insbesondere wenn entsprechende Manöver im Einsatz der Fahrzeuge häufig sind.

Die aus dem Stand der Technik bekannten parameterbasierten Verfahren, welche eine Abschätzung des Profilzustandes insbesondere ausgehend von Parametern wie der gefahrenen Distanz und/oder der Fahrzeuggeschwindigkeit berechnen, sind nach Einschätzung der Erfinder regelmäßig nicht in der Lage, die im Zuge von Rangiermanövern erfahrenen Belastungen der Fahrzeugreifen bei der Abschätzung des Profilzustandes korrekt abzubilden. Dies erstreckt sich dabei auch auf andere Fahrsituationen beispielsweise sehr enge und entsprechend zumeist sehr langsam erfolgte Kurvenfahrten, wie sie beispielsweise innerorts auftreten können. Viele der aus dem Stand der Technik bekannten parameterbasierten Verfahren registrieren entsprechende Rangiermanöver als Standphasen bzw. Phasen niedriger Geschwindigkeit und erachten die entsprechenden Zeiten somit häufig als quasi "reifenschonend", obwohl die Fahrzeugreifen in der Praxis tatsächlich eine spürbare Belastung erfahren.

Die primäre Aufgabe der vorliegenden Erfindung war es, die vorstehend beschriebenen Nachteile des Standes der Technik auszuräumen oder zumindest abzuschwächen.

Insbesondere war es eine Aufgabe der vorliegenden Erfindung, ein Verfahren zur Abschätzung der Profiltiefe von Fahrzeugreifen anzugeben, mit dem die Profiltiefe von Fahrzeugreifen zuverlässig und effizient abgeschätzt werden kann, wobei die Fehleranfälligkeit des Verfahrens gegenüber dem Stand der Technik verringert sein sollte.

Dabei war es eine Aufgabe der vorliegenden Erfindung, dass insbesondere der Einfluss von Rangiermanövern, wie beispielsweise Einparkmanövern oder Kurvenfahrten, besser berücksichtigt werden kann.

Es war eine Aufgabe der vorliegenden Erfindung, dass das anzugebende Verfahren eine hohe Kompatibilität mit bestehenden Verfahren zur Abschätzung der Profiltiefe von Fahrzeugreifen aufweisen sollte und eine effiziente Korrektur der mit diesen bestehenden Verfahren abgeschätzten Profiltiefen erlauben sollte. Insoweit war es eine wünschenswerte Vorgabe, dass das anzugebende Verfahren nicht nur eine Verbesserung der Abschätzungsqualität von parameterbasierten Verfahren erlauben sollte, sondern auch eine effizientere Durchführung von sonstigen Verfahren zur Abschätzung der Profiltiefe ermöglichen sollte, wobei insbesondere eine Verringerung des Rechenaufwandes angestrebt wurde.

Insbesondere war es eine Aufgabe der vorliegenden Erfindung, dass das anzugebende Verfahren besonders ressourcenschonend und mit einem möglichst geringen Bedarf an Rechenkapazität ausführbar sein sollte, sodass das anzugebende Verfahren besonders effizient mit den in einem Fahrzeug integrierten Datenverarbeitungsvorrichtung ausführbar sein sollte.

Zudem war es wünschenswert, dass das anzugebende Verfahren möglichst geringe Anforderungen an die benötigte zusätzliche Sensorik stellen sollte, wobei insbesondere wünschenswert war, dass keine zusätzlichen im Fahrzeugreifen verbauten Sensoren benötigt werden. Idealerweise sollte für das anzugebende Verfahren zudem ein Zugriff auf solche Sensoren ausreichend sein, welche im Fahrzeug bzw. in der Fahrzeugperipherie ohnehin vorhanden sind.

Zudem war es eine Aufgabe der vorliegenden Erfindung, ein Fahrzeug bereitzustellen, welches für die Durchführung des anzugebenden Verfahrens spezifisch eingerichtet ist.

Die Erfinder der vorliegenden Erfindung haben nunmehr gefunden, dass sich die vorstehend beschriebenen Aufgaben lösen lassen, wenn in einem Verfahren zur Abschätzung der Profiltiefe von Fahrzeugreifen, typischerweise in Ergänzung zu einem bestehenden Verfahren zur Abschätzung der Profiltiefe, insbesondere einem parameterbasierten Verfahren, beim Bewegen des Fahrzeuges zudem die zeitabhängige Ausrichtung des Fahrzeuges über einen Ausrichtungssensor detektiert wird, indem die für die Fahrzeugreifen gespeicherte Profiltiefeninformation, welche beispielsweise über das komplementäre Verfahren zur Abschätzung der Profiltiefe des Fahrzeugreifens während Fahrzeiten bestimmt werden kann, in Abhängigkeit von der detektierten Änderung der Ausrichtung des Fahrzeugs korrigiert wird, wie es in den Ansprüchen definiert ist.

Mit anderen Worten wird durch das erfindungsgemäße Verfahren eine Möglichkeit zur Verfügung gestellt, die das Ergebnis der indirekten Reifenprofiltiefenbestimmung durch die Berücksichtigung des Abriebs im quasistationären Zustand bei Rangiervorgängen verbessert. Hierdurch können insbesondere in Kombination mit parameterbasierten Verfahren zur Abschätzung der Profiltiefe von Fahrzeugreifen die Nachteile des Standes der Technik bei der Berücksichtigung von Rangiermanövern in vorteilhafter Weise kompensiert werden. Darüber hinaus ergeben sich auch Vorteile bei der Kombination mit anderen Abschätzungsverfahren, beispielsweise den vorstehend offenbarten Beschleunigungs- und/oder GPS-basierten Verfahren. Auch wenn diese prinzipiell eine Abschätzung der absoluten Profilbeschaffenheit ermöglichen, greifen sie zur Verringerung der benötigten Rechenkapazität bzw. zur Verbesserung der Abschätzungsqualität häufig auf die zuvor abgeschätzten Profiltiefen zurück, welche für das vorangehende Abschätzungsintervall auf der Speichereinheit der elektronischen Datenvorrichtung hinterlegt wurden. Die Korrektur der zwischengespeicherten Profiltiefeninformation im Rahmen des erfindungsgemäßen Verfahrens erlaubt somit die Eingabe eines präziseren Ausgangswerts in den nachfolgenden Abschätzungsverfahren, wodurch die benötigte Rechenkapazität reduziert und die Gesamtgenauigkeit der Abschätzung zusätzlich verbessert werden kann.

Die vorstehend genannten Aufgaben werden somit durch den Gegenstand der Erfindung gelöst, wie er in den Ansprüchen definiert ist. Bevorzugte erfindungsgemäße Ausgestaltungen ergeben sich aus den Unteransprüchen und den nachfolgenden Ausführungen.

Solche Ausführungsformen, die nachfolgend als bevorzugt bezeichnet sind, werden in besonders bevorzugten Ausführungsformen mit Merkmalen anderer als bevorzugt bezeichneter Ausführungsformen kombiniert. Ganz besonders bevorzugt sind somit Kombinationen von zwei oder mehr der nachfolgend als besonders bevorzugt bezeichneten Ausführungsformen. Ebenfalls bevorzugt sind Ausführungsformen, in denen ein in irgendeinem Ausmaß als bevorzugt bezeichnetes Merkmal einer Ausführungsform mit einem oder mehreren weiteren Merkmalen anderer Ausführungsformen kombiniert wird, die in irgendeinem Ausmaß als bevorzugt bezeichnet werden. Merkmale bevorzugter Fahrzeugsysteme ergeben sich aus den Merkmalen bevorzugter Verfahren.

Die Erfindung betrifft insbesondere ein Verfahren zur Abschätzung der Profiltiefe von Fahrzeugreifen bei einem Fahrzeug, umfassend die Verfahrensschritte:
a) Bewegen des Fahrzeuges in einem Zeitintervall,
b) Detektieren der zeitabhängigen Ausrichtung des Fahrzeuges mit einem Ausrichtungssensor im Zeitintervall, und
c) Korrigieren einer für einen Fahrzeugreifen des Fahrzeuges auf einer Speichereinheit einer elektronischen Datenverarbeitungsvorrichtung gespeicherten Profiltiefeninformation in Abhängigkeit von der detektierten Änderung der Ausrichtung des Fahrzeuges im Zeitintervall.

Das erfindungsgemäße Verfahren dient der Abschätzung der Profiltiefe von Fahrzeugreifen bei einem Fahrzeug, gegebenenfalls in Kombination mit einem weiteren Abschätzungsverfahren, welches insbesondere die Veränderung der Profiltiefe außerhalb von Rangiermanövern, beispielsweise im regulären Fahrbetrieb, mit einem Abschätzungsverfahren abbildet. Zumindest theoretisch ist jedoch insbesondere bei Arbeitsfahrzeugen, bei denen sich durch den spezifischen Einsatzzweck ein besonders hoher Beitrag der Rangiermanöver zum Reifenabrieb ergibt, auch eine alleinige Nutzung des erfindungsgemäßen Verfahrens denkbar.

Infolge der genaueren Abschätzungsqualität unter Berücksichtigung von Rangiermanövern ist das erfindungsgemäße Verfahren insbesondere für den Einsatz mit solchen Fahrzeugen geeignet, welche beispielsweise infolge einer hohen Achslast bei Rangiermanövern mit besonders ausgeprägten Reifenabrieb konfrontiert sind. Beispielhaft ist folglich ein erfindungsgemäßes Verfahren, wobei das Fahrzeug ein Nutzfahrzeug, bevorzugt ein LKW, ein LKW-Anhänger oder ein Bus, bevorzugt ein LKW oder ein LKW-Anhänger, ist.

Der Fachmann versteht, dass das erfindungsgemäße Verfahren insbesondere dazu dient, die im alltäglichen Einsatz auftretenden zusätzlichen Belastungen von Fahrzeugreifen zu kompensieren. Typischerweise wird es sich um ein erfindungsgemäßes Verfahren handeln, wobei das Bewegen des Fahrzeuges im Straßenverkehr erfolgt.

Das erfindungsgemäße Verfahren dient insbesondere zur Berücksichtigung solcher Fahrmanöver, bei denen eine ausgeprägte Schwenkbewegung des Fahrzeugs und entsprechend umfassende Lenkbewegungen erfolgen, während sich der Schwerpunkt des Fahrzeugs nur vergleichsweise geringfügig bewegt bzw. das Fahrzeug nur eine geringe Geschwindigkeit aufweist. Beispielhaft ist ein erfindungsgemäßes Verfahren, wobei das Bewegen des Fahrzeuges im Zeitintervall eine Rangierbewegung oder Parkbewegung, bevorzugt eine Rangierbewegung, umfasst oder daraus besteht.

Das Bewegen des Fahrzeuges im Zeitintervall umfasst eine Veränderung der Ausrichtung des Fahrzeuges um 15° oder mehr, bevorzugt 30° oder mehr, besonders bevorzugt 45° oder mehr, bezogen auf die Längsachse des Fahrzeugs, wobei die Änderung der Ausrichtung bei einer mittleren Fahrzeuggeschwindigkeit von 10 km/h oder weniger, bevorzugt 5 km/h oder weniger, besonders bevorzugt 2,5 km/h oder weniger, erfolgt und wobei die Änderung der Ausrichtung bei einer maximalen Änderung der Position des Fahrzeugschwerpunktes von 20 m oder weniger, bevorzugt 10 m oder weniger, besonders bevorzugt 5 m oder weniger, erfolgt.

Um im erfindungsgemäßen Verfahren die vorgesehene Korrektur vorzunehmen, wird die zeitabhängige Ausrichtung des Fahrzeugs detektiert, was zweckmäßigerweise bezogen auf die Längsachse des Fahrzeugs erfolgen kann. In diesem Fall handelt es sich um erfindungsgemäßes Verfahren, wobei das Detektieren der zeitabhängigen Ausrichtung des Fahrzeuges das Detektieren der Ausrichtung der Fahrzeuglängsachse umfasst.

Die Detektion der Ausrichtung des Fahrzeuges erfolgt mithilfe eines Ausrichtungssensors. Bevorzugt ist dabei ein erfindungsgemäßes Verfahren, wobei der Ausrichtungssensor ein elektronischer Ausrichtungssensor ist, wobei der Ausrichtungssensor bevorzugt Bestandteil der elektronische Datenverarbeitungsvorrichtung ist oder mit der elektronischen Datenverarbeitungsvorrichtung signalleitend verbunden ist.

Dem Fachmann sind ausgehend von seinem allgemeinen Fachwissen geeignete Ausrichtungssensoren bekannt, mit denen die relative Ausrichtung des Fahrzeugs und deren Änderung detektiert werden kann. Entsprechende Ausrichtungssensoren sind dabei von verschiedenen Anbietern kommerziell erhältlich. Nach Einschätzung der Erfinder eignen sich insbesondere solche Ausrichtungssensoren, welche die Ausrichtung des Fahrzeugs relativ zum Erdmagnetfeld oder zur Erdrotationsachse detektieren. Bevorzugt ist entsprechend ein erfindungsgemäßes Verfahren, wobei der Ausrichtungssensor die Ausrichtung des Fahrzeuges relativ zum Erdmagnetfeld detektiert. Besonders bevorzugt ist dabei ein erfindungsgemäßes Verfahren, wobei der Ausrichtungssensor einen Magnetkompass oder einen Hall-Sensor umfasst. Bevorzugt ist zusätzlich oder alternativ ein erfindungsgemäßes Verfahren, wobei der Ausrichtungssensor die Ausrichtung des Fahrzeuges relativ zur Erdrotationsachse detektiert. Bevorzugt ist insoweit ein erfindungsgemäßes Verfahren, wobei der Ausrichtungssensor einen Kreiselkompass umfasst.

Im Rahmen des erfindungsgemäßen Verfahrens wird die Ausrichtung des Fahrzeugs mit dem Ausrichtungssensor als zeitabhängige Information bestimmt. In Übereinstimmung mit dem fachmännischen Verständnis dient dies dazu, um Änderungen in der Ausrichtung des Fahrzeugs zu registrieren, welche sich im Zuge der Bewegung des Fahrzeuges ergeben. Es kann dabei als Vorteil des erfindungsgemäßen Verfahrens gesehen werden, dass bereits mit stark reduzierten Abtastraten, beispielsweise von kleiner als 1 Hz, gute Ergebnisse erzielt werden können. Dies ist insbesondere dadurch bedingt, dass entsprechende Rangiermanöver, insbesondere bei Nutzfahrzeugen, regelmäßig auf einer vergleichsweise langen Zeitskala ablaufen, sodass auch mit vergleichsweise stark reduzierten Abtastraten Rangiervorgänge zumeist zuverlässig bestimmt werden können. Zweckmäßig ist dabei ein erfindungsgemäßes Verfahren, wobei das Detektieren der zeitabhängigen Ausrichtung des Fahrzeuges mit einer Messfrequenz von 0,1 Hz oder mehr, bevorzugt 0,2 Hz oder mehr, besonders bevorzugt 0,5 Hz oder mehr, erfolgt. Bevorzugt ist dabei zusätzlich oder alternativ ein erfindungsgemäßes Verfahren, wobei das Detektieren der zeitabhängigen Ausrichtung des Fahrzeuges mit einer Messfrequenz von 5 Hz oder weniger, bevorzugt 2 Hz oder weniger, besonders bevorzugt 1 Hz oder weniger, erfolgt.

Vorstehend ist definiert, dass das Bewegen des Fahrzeugs in einem Zeitintervall erfolgt, auf das auch die Detektion der zeitabhängigen Ausrichtung des Fahrzeugs bezogen ist. In Übereinstimmung mit dem fachmännischen Verständnis wird dadurch ausgedrückt, dass das Bewegen, die Detektion und die anschließende Korrektur auf das gleiche Zeitintervall bezogen sind. Dieses Zeitintervall kann dabei vom Fachmann im Prinzip frei gewählt werden, wobei es zweckmäßig ist, das Zeitintervall so zu bemessen, dass beispielsweise ein beobachteter Rangiervorgang vollständig in diesem Zeitintervall liegt.

In Verfahrensschritt c) des erfindungsgemäßen Verfahrens erfolgt eine Korrektur der für einen Fahrzeugreifen des Fahrzeugs gespeicherten Profiltiefeninformation, wobei die Korrektur in Abhängigkeit der zuvor detektierten Änderung der Ausrichtung des Fahrzeugs erfolgt.

Eine im Zeitintervall gegebenenfalls detektierte Änderung der Ausrichtung des Fahrzeugs wird im erfindungsgemäßen Verfahren durch die Korrektur einer gespeicherten Profiltiefeninformation erreicht. Diese Profiltiefeninformation kann dabei beispielsweise durch ein komplementäres Abschätzungsverfahren, insbesondere ein parameterbasiertes indirektes Abschätzungsverfahren erhalten worden sein und/oder wiederum ein Eingabeparameter für ein nachgelagertes indirektes Abschätzungsverfahren sein, wie es nachfolgend offenbart wird. Der Schritt der Korrektur der gespeicherten Profiltiefeninformation wird im erfindungsgemäßen Verfahren durch eine elektronische Datenverarbeitungsvorrichtung durchgeführt.

Die Erfinder schlagen vor, dass sowohl die elektronische Datenverarbeitungsvorrichtung nebst Speichereinheit als auch prinzipiell der Ausrichtungssensor, entweder als Teil des Fahrzeugs ausgeführt sein können oder durch eine separate Vorrichtung bereitgestellt werden können. In Übereinstimmung mit dem fachmännischen Verständnis ist es hierbei wichtig, dass ein über eine separate Vorrichtung bereitgestellter Ausrichtungssensor durch Durchführung des erfindungsgemäßen Verfahrens auch so angeordnet ist, dass eine Ausrichtungsänderung des Fahrzeugs detektiert werden kann, beispielsweise indem eine separat ausgeführte Vorrichtung im Inneren des Fahrzeugs positioniert wird. Zudem ist es für den Fall, dass die elektronische Datenverarbeitungsvorrichtung und der Ausrichtungssensor durch den Aufbau des Fahrzeugsystems voneinander separiert sind, beispielsweise weil die eine Komponente Teil des Fahrzeugs ist und die andere Komponente durch eine separate Vorrichtung bereitgestellt wird, wichtig, dass diese beiden Komponenten miteinander kommunizieren können, was beispielsweise über eine elektronische Kommunikationseinheit möglich ist, welche Bluetooth oder andere Funkverfahren verwendet. Denkbar ist zum Beispiel, dass die elektronische Datenverarbeitungsvorrichtung bzw. deren Speichereinheit durch eine "Cloud" gebildet werden, in der die Profiltiefeninformationen vorliegen, so dass diese beispielsweise nur vom Flottenmanager einsehbar sind.

Nach Einschätzung der Erfinder ist dabei insbesondere die Ausgestaltung bevorzugt, in der die elektronische Datenverarbeitungsvorrichtung und/oder der Ausrichtungssensor, bevorzugt beide dieser Komponenten, durch ein separates mobiles Endgerät bereitgestellt werden. In vorteilhafter Weise sind diese entsprechenden mobilen Endgeräte bei Fahrzeugführern zumeist ohnehin vorhanden und können somit unter Einsatz eines entsprechenden Computerprogrammprodukts zur Durchführung des erfindungsgemäßen Verfahrens benutzt werden. Zudem verfügen der modernen mobilen Endgeräte regelmäßig über geeignete Ausrichtungssensoren, welche beispielsweise bei Anordnung eines Mobiltelefons im Innenraum des Fahrzeugs eine für das erfindungsgemäße Verfahren nutzbare Detektion der Ausrichtungsänderung gewährleisten können. Denkbar ist somit ein erfindungsgemäßes Verfahren, wobei das Fahrzeug die elektronische Datenverarbeitungsvorrichtung umfasst und/oder wobei das Fahrzeug den Ausrichtungssensor umfasst.

Bevorzugt ist jedoch ein erfindungsgemäßes Verfahren, wobei die elektronische Datenverarbeitungsvorrichtung Bestandteil einer vom Fahrzeug separaten Vorrichtung, bevorzugt eines mobilen Endgeräts oder eines zentralen Servernetzwerks, ist, wobei das Fahrzeug im Falle eines als Bestandteil des Fahrzeuges ausgeführten Ausrichtungssensors eine elektronische Kommunikationseinheit zur drahtlosen Kommunikation mit der elektronische Datenverarbeitungsvorrichtung in der separaten Vorrichtung umfasst. Bevorzugt ist zusätzlich oder alternativ auch ein erfindungsgemäßes Verfahren, wobei der Ausrichtungssensor Bestandteil einer vom Fahrzeug separaten und im Fahrzeug angeordneten Vorrichtung, bevorzugt eines mobilen Endgeräts, ist, wobei das Fahrzeug im Falle einer im Fahrzeug angeordneten Datenverarbeitungsvorrichtung bevorzugt eine elektronische Kommunikationseinheit zur drahtlosen Kommunikation des Ausrichtungssensors mit der elektronische Datenverarbeitungsvorrichtung umfasst.

In Verfahrensschritt c) wird eine Profiltiefeninformation korrigiert. Nachfolgend wird dabei genauer offenbart, wie diese später zu korrigierende Profiltiefeninformation zuvor erhalten worden sein kann. An dieser Stelle sollen jedoch zunächst die Profiltiefeninformationen selbst und die angewandte Korrektur im Vordergrund stehen.

Die Profiltiefeninformation kann im einfachsten Fall durch zuvor durchgeführte händische Messung bestimmt und auf der Speichereinheit gespeichert worden sein, wobei es bevorzugt ist, wenn die Profiltiefeninformation zuvor mittels eines Abschätzungsverfahren abgeschätzt wurde, wobei die Profiltiefeninformation auch wiederum das Ergebnis eines erfindungsgemäßes Verfahrens sein kann, bei dem die Ausgabe eines ersten Durchlaufs als Eingabe in einem nachfolgenden Verfahren verwendet wird.

Bei der Profiltiefeninformation kann es sich prinzipiell um jede Information handeln, die geeignet ist, den Zustand der Profiltiefe des Fahrzeugreifen zu quantifizieren. Eine besondere Bedeutung hat dabei eine Profiltiefeninformation, bei welcher es sich um die absolute Tiefe des Reifenprofils an einer vorbestimmten Stelle bzw. die mittlere Profiltiefe über mehrere Messpositionen handelt, wobei insbesondere die absolute Profiltiefe der mittleren Profilrille eine besonders hohe Praxisrelevanz hat.

Im Wissen um die vorliegende Erfindung kann der Fachmann die auf der Speichereinheit hinterlegte Profiltiefeninformation in einer zum Anwendungsfall passenden Art und Weise korrigieren und dies insbesondere auf die Anforderungen des zum Erhalt der Profiltiefeninformation verwendeten Verfahrens abstimmen. Den Erfindern ist es jedoch gelungen, insoweit besonders bevorzugte Korrekturverfahren zu identifizieren. Diesen Ausführungsformen ist es dabei gemein, dass sich die Bemessung der notwendige Korrekturoperation vom Fachmann jeweils ausgehend von Erfahrungsdaten konzipieren lässt. Hierbei kann beispielsweise der bei Rangiermanövern auftretende zusätzliche Reifenabrieb in einem Testaufbau oder unter realen Straßenbedingungen an entsprechenden Fahrzeugen als Erfahrungswert bestimmt werden. Hierdurch kann mittels der Korrektur berücksichtigt werden, welchen Einfluss die Rangiermanöver auf die Profiltiefe bzw. den Zustand des Profils der Fahrzeugreifen haben, insbesondere auch in Abhängigkeit von weiteren Reifenparametern, wie beispielsweise der Gummizusammensetzung oder des Reifendrucks.

In einer ersten Ausführungsform des erfindungsgemäßen Verfahrens ist es beispielsweise denkbar, dass die gespeicherte Profiltiefeninformation proportional zum Ausmaß der detektierten Ausrichtungsänderung korrigiert wird, d. h. dass die Korrektur der gespeicherten Profiltiefeninformation umso stärker erfolgt, umso größer die detektierte Änderung der Ausrichtung im Zeitintervall war. Es handelt sich entsprechend um ein erfindungsgemäßes Verfahren, wobei die auf der Speichereinheit gespeicherte Profiltiefeninformation proportional zu der im Zeitintervall detektierten Änderung der Ausrichtung korrigiert wird.

Hierbei schlagen die Erfinder vor, dass die Profiltiefeninformation, welche typischerweise die Einheit einer Länge, beispielsweise "mm", aufweist, um einen Korrekturwert A korrigiert wird, welcher proportional zum Integral der detektierten Ausrichtungsänderungen des Fahrzeugs ist, wobei der Proportionalitätsfaktor erfahrungsbasiert festgelegt bzw. in Versuchen bestimmt werden kann. Bevorzugt ist demgemäß ein erfindungsgemäßes Verfahren, wobei die auf der Speichereinheit gespeicherte Profiltiefeninformation durch Subtraktion eines variablen Korrekturwertes A korrigiert wird, wobei der variable Korrekturwert A proportional zum Integral der im Zeitintervall detektierten Änderung der Ausrichtung des Fahrzeuges ist.

Zusätzlich oder alternativ kann die Korrektur auch so erfolgen, dass die Profiltiefeninformation erst dann um einen vorgegebenen Korrekturwert korrigiert wird, wenn die detektierte Ausrichtungsänderung eine bestimmte Schwelle überschreitet, um beispielsweise nur solche Rangiermanöver zu berücksichtigen, welche mit einer Mindeständerung der Position verbunden sind und bei denen entsprechend ein gewisser Einfluss auf den Profilzustand zu erwarten ist. Hierdurch können kleinere Ausrichtungsänderungen unberücksichtigt bleiben, wodurch das Verfahren besonders ressourcenschonend ausgeführt werden kann. Bevorzugt ist entsprechend ein erfindungsgemäßes Verfahren, wobei die auf der Speichereinheit gespeicherte Profiltiefeninformation durch Subtraktion eines vorgegebenen Korrekturwertes B korrigiert wird, wenn die im Zeitintervall detektierten Änderung der Ausrichtung des Fahrzeuges ein vorgegebenes Kriterium erfüllt, insbesondere eine vorgegebene Mindeständerung der Ausrichtung unterhalb einer vorgegebenen Maximaländerung der mittleren Fahrzeugposition im Zeitintervall.

Die Erfinder schlagen vor, dass in der Weiterentwicklung der vorstehend beschriebenen Ausgestaltung bei der Korrektur der Profiltiefeninformation auch auf einen Klassifikationsansatz zurückgegriffen werden kann, bei dem bestimmte Änderungsprofile der Fahrzeugausrichtung, insbesondere unter Berücksichtigung von weiteren Parametern wie Fahrzeuggeschwindigkeit und/oder der Änderung der mittleren Position des Fahrzeugschwerpunktes aber auch unter Berücksichtigung weiterer Einflussfaktoren wie beispielsweise des Radstandes, in verschiedene Klassen einer Klassifikation klassiert werden. Dies entspricht im Wesentlichen der Erkennung spezifischer Rangiermanöver in Abhängigkeit von der erfahrenen Änderung, sodass jeder entsprechenden Bewegungsklasse, d.h. jeder Art von Rangiermanöver, eine vorbestimmte Korrektur-Aktion zugeordnet werden kann. Beispielsweise kann eine detektierte Kurvenfahrt mit einem anderen Korrekturwert C verbunden sein als ein Einparkmanöver. Bevorzugt ist zur Umsetzung dieser Ausgestaltung ein erfindungsgemäßes Verfahren, wobei das Korrigieren in Verfahrensschritt c) die folgenden Unterschritte umfasst:
c1) Klassieren der detektierten Änderung der Ausrichtung des Fahrzeuges in zwei oder mehr Bewegungsklassen einer Klassifikation,
c2) Korrigieren der gespeicherten Profiltiefeninformation um einen bewegungsklassenspezifischen Korrekturwert C in Abhängigkeit von der Klassierung, wobei der bewegungsklassenspezifische Korrekturwert C für die Bewegungsklassen der Klassifikation vorgegeben ist.

Besonders bevorzugt ist dabei ein erfindungsgemäßes Verfahren, wobei das Klassieren der detektierten Änderung der Ausrichtung des Fahrzeuge in Unterschritt c1) unter Berücksichtigung der Fahrzeuggeschwindigkeit und/oder der Änderung der mittleren Position des Fahrzeugschwerpunktes erfolgt. Besonders bevorzugt ist zusätzlich oder alternativ auch ein erfindungsgemäßes Verfahren, wobei die zwei oder mehreren Bewegungsklassen ausgewählt sind aus der Gruppe bestehend aus Rangierbewegungen, Parkbewegungen und Kurvenfahrten, bevorzugt ausgewählt sind aus der Gruppe bestehend aus Rangierbewegungen und Parkbewegungen.

Das erfindungsgemäße Verfahren ist bereits dann vorteilhaft, wenn es für lediglich einen Fahrzeugreifen eines Fahrzeugs verwendet wird. Der Fachmann versteht jedoch, dass es bevorzugt ist, das erfindungsgemäße Verfahren auf im Wesentlichen sämtliche Fahrzeugreifen des Fahrzeugs anzuwenden. Bevorzugt ist entsprechend ein erfindungsgemäßes Verfahren, wobei sämtliche der für die Fahrzeugreifen des Fahrzeuges auf der Speichereinheit gespeicherten Profiltiefeninformation in Abhängigkeit von der detektierten Änderung der Ausrichtung des Fahrzeuges im Zeitintervall korrigiert werden.

Die Erfinder schlagen vor, dass die im erfindungsgemäßen Verfahren erhaltene korrigierte Profiltiefeninformation am Ende des Verfahrens ausgegeben werden kann, beispielsweise an eine zentrale Datenbank eines Flotten-Management-Systems, wobei nach Einschätzung der Erfinder jedoch die unmittelbare Wiedergabe einer entsprechenden Zustandsinformation an den Fahrzeugführer, wie sie beispielsweise über ein Display erfolgen kann, bevorzugt ist, um den Fahrzeugführer jederzeit über den Reifenzustand bestmöglich informiert zu halten. Bevorzugt ist entsprechend ein erfindungsgemäßes Verfahren, zusätzlich umfassend den Verfahrensschritt:
d) Ausgeben einer Information über die korrigierte Profiltiefeninformation des Fahrzeugreifens über eine Ausgabeeinheit, bevorzugt über ein elektronische Anzeigevorrichtung.

Wie vorstehend erläutert, ist es für das erfindungsgemäße Verfahren prinzipiell unbeachtlich, wie die im Rahmen des Verfahrens zu korrigierende Profiltiefeninformation zuvor ermittelt wurde. Im Lichte der vorstehenden Offenbarung versteht der Fachmann jedoch, dass es besonders bevorzugt ist, das erfindungsgemäße Verfahren zur Korrektur solcher Profiltiefeninformationen zu verwenden, welche zuvor mit einem Profiltiefenabschätzungsverfahren berechnet wurden. Bevorzugt ist somit ein erfindungsgemäßes Verfahren, wobei die auf der Speichereinheit gespeicherte Profiltiefeninformation mit einem von der elektronischen Datenverarbeitungsvorrichtung durchgeführten indirekten Profiltiefenabschätzungsverfahren berechnet wird.

In Übereinstimmung mit dem fachmännischen Verständnis ist ein indirektes Profiltiefenabschätzungsverfahren ein Verfahren, in dem die Profiltiefe eines Fahrzeugreifens nicht unmittelbar, d.h. direkt, gemessen wird, beispielsweise durch optische Verfahren, sondern in dem die Profiltiefe eines Fahrzeugreifens indirekt durch Auswertung anderer Messparameter abgeschätzt wird, wobei die Art der benötigten Messparameter und die Komplexität der Rechenoperationen von der Art des indirekten Profiltiefenabschätzungsverfahrens abhängig ist.

Entsprechende indirekte Profiltiefenabschätzungsverfahren sind dem Fachmann grundsätzlich bekannt und beispielsweise im vorstehend angeführten Stand der Technik offenbart. Aus diesen Verfahren wählt der Fachmann ein geeignetes indirektes Profiltiefenabschätzungsverfahren im Lichte der verfügbaren Parameter und der zur Verfügung stehenden Rechenkapazität aus.

Die hinsichtlich ihrer Natur und Funktionsweise sehr unterschiedlichen Verfahren in allen Einzelheiten zu beschreiben würde den vorliegenden Rahmen sprengen. Nachfolgend werden jedoch bevorzugte indirekte Profiltiefenabschätzungsverfahren und deren bevorzugte Ausgestaltungen näher definiert. Darüber hinaus wird an dieser Stelle auf den einschlägigen Stand der Technik verwiesen.

Das Abschätzen der Profiltiefe mit dem indirekten Profiltiefenabschätzungsverfahren wird zweckmäßigerweise durch eine elektronische Datenverarbeitungsvorrichtung durchgeführt, bevorzugt die elektronische Datenverarbeitungsvorrichtung, die im erfindungsgemäßen Verfahren auch die Korrekturoperation durchführt. Es handelt sich also in anderen Worten bevorzugt um ein erfindungsgemäßes Verfahren, wobei die elektronische Datenverarbeitungsvorrichtung dazu eingerichtet ist, die Profiltiefe des Fahrzeugreifens des Fahrzeuges mit einem indirekten Profiltiefenabschätzungsverfahren abzuschätzen und als Profiltiefeninformation auf der Speichereinheit zu speichern.

Grundsätzlich ist das erfindungsgemäße Verfahren dabei für das Zusammenwirken mit solchen indirekten Profiltiefenabschätzungsverfahren besonders geeignet, bei denen jede neue Abschätzung der Profiltiefe ausgehend von einem zuvor abgeschätzten Wert ausgeht, wodurch insbesondere die Genauigkeit erhöht und der benötigte Rechenaufwand reduziert werden kann. Diese Verfahren, zu denen neben den nachfolgend weiter offenbarten parameterbasierten Abschätzungsverfahren auch einige aus dem Stand der Technik bekannten alternativen Abschätzungsverfahren gehören, profitieren davon, dass die in den jeweils nächsten Abschätzungsschritt einbezogene Endprofiltiefe des vorausgehenden Abschätzungsschritts im Rahmen des erfindungsgemäßen Verfahrens in Abhängigkeit von der detektierten Ausrichtungsänderung des Fahrzeugs korrigiert werden, um möglichst zuverlässige Ausgangswerte für den nächsten Abschätzungsschritt zu erhalten. Bevorzugt ist demnach ein erfindungsgemäßes Verfahren, wobei das indirekte Profiltiefenabschätzungsverfahren für zwei oder mehr Fahrabschnitte durchgeführt wird, wobei für die Anfangsprofiltiefe am Anfang des zweiten oder weiteren Fahrabschnitts die für den vorangegangenen Fahrabschnitt abgeschätzte Endprofiltiefe am Ende des vorangegangenen Fahrabschnitts verwendet wird, wobei die Endprofiltiefe gegebenenfalls in Abhängigkeit von der detektierten Änderung der Ausrichtung des Fahrzeuges im Zeitintervall des Fahrabschnittes korrigiert wird.

Einen besonders positiven Effekt auf die Genauigkeit des Profiltiefenabschätzungsergebnisses hat das erfindungsgemäße Verfahren bei der Korrektur solcher Profiltiefeninformationen, welche mit einem parameterbasierten Ansatz erhalten werden. Diesen Verfahren ist gemein, dass sie die Profiltiefe insbesondere in Abhängigkeit von der zurückgelegten Fahrstrecke abschätzen, wobei in Abhängigkeit von der jeweiligen Variante des Profiltiefenabschätzungsverfahrens auch äußere Parameter, beispielsweise zur Temperatur oder Streckenbeschaffenheit, einbezogen werden. Bevorzugt ist entsprechend ein erfindungsgemäßes Verfahren, wobei das indirekte Profiltiefenabschätzungsverfahren die Anpassung eines in der Speichereinheit gespeicherten Ausgangsprofilswerts des Fahrzeugreifen für einen Fahrabschnitt in Abhängigkeit von der zurückgelegten Fahrstrecke umfasst.

Nach Einschätzung der Erfinder ist ein entsprechendes indirektes Profiltiefenabschätzungsverfahren, welches sich besonders effizient mit dem erfindungsgemäßen Verfahren kombinieren lässt, ein solches Verfahren, welches auf der Bestimmung von sogenannten Abriebsschärfezahlen unter Berücksichtigung einer Mehrzahl von Einflussparametern basiert. Entsprechende Verfahren sind dem Fachmann dabei aus dem Stand der Technik isoliert bekannt. Bevorzugt ist ein erfindungsgemäßes Verfahren, wobei das indirekte Profiltiefenabschätzungsverfahren ausgewählt ist aus der Gruppe bestehend aus Verfahren zur indirekten Profiltiefenabschätzung durch Kalkulation der in einem Fahrabschnitt auf den Fahrzeugreifen wirkenden Kräfte aus Fahrparametern des Fahrzeuges, bevorzugt unter Bestimmung von Abriebsschärfezahlen unter Berücksichtigung einer Mehrzahl von Einflussparametern.

Auch für das mit dem erfindungsgemäßen Verfahren zu kombinierende bevorzugte parameterbasierte Profiltiefenabschätzungsverfahren können die Erfinder bevorzugte Ausgestaltungen angeben, an denen sich der Fachmann bei der Umsetzung der Erfindung orientieren kann.

Bevorzugt ist insbesondere ein erfindungsgemäßes Verfahren, wobei das indirekte Profiltiefenabschätzungsverfahren ein Verfahren zur indirekten Profiltiefenabschätzung durch Kalkulation von Abriebsschärfezahlen ist, umfassend die Verfahrensschritte:
w) Fahren des Fahrzeuges entlang einer vorbestimmten Fahrdistanz in einem Fahrabschnitt,
x) Ermitteln einer Mehrzahl von Fahrparametern des Fahrzeugs während der Fahrt im Fahrabschnitt,
y) Kalkulieren der im Fahrabschnitt auf den Fahrzeugreifen wirkenden Kräfte ausgehend von den ermittelten Fahrparametern und Bestimmen einer dem Fahrabschnitt zugeordneten Abriebsschärfezahl aus den kalkulierten Kräften unter Berücksichtigung einer Mehrzahl von Einflussparametern, wobei die Einflussparameter ausgewählt sind aus der Gruppe bestehend aus Fahrzeugparametern, Umgebungsparametern und Reifenparametern, wobei die Einflussparameter zumindest Informationen über das Laufstreifenmaterial des Fahrzeugreifens und über die Anfangsprofiltiefe am Anfang des Fahrabschnitts umfassen, und
z) Abschätzen der Endprofiltiefe am Ende des Fahrabschnitts für den Fahrzeugreifen ausgehend von der jeweiligen Anfangsprofiltiefe am Anfang des Fahrabschnitts unter Berücksichtigung der jeweiligen Abriebsschärfezahl.

Das Fahren gemäß Verfahrensschritt w) erfolgt dabei über eine vorbestimmten Fahrdistanz, wobei die Zeit bzw. die Strecke zwischen dem Anfang und dem Ende der vorbestimmten Fahrdistanz als Fahrabschnitt bezeichnet wird. Der Fahrabschnitt ist dabei das zeitliche bzw. räumliche Intervall, in dem eine Abschätzung der Profiltiefe erfolgt. Der Fachmann versteht, dass die Länge des Fahrabschnitts mit der Datenqualität korreliert, die in das indirekte Profiltiefenabschätzungsverfahren eingespeist werden kann. Auch wenn es prinzipiell möglich wäre, sehr kurze Fahrdistanzen wie beispielsweise 100 m anzulegen, schlagen die Erfinder vor, dass die vorbestimmte Fahrdistanz nicht zu kurz gewählt werden sollte, damit eine besonders zuverlässige Ermittlung der Fahrparameter möglich wird. Hierdurch gleichen sich etwaige Messfehler und Unsicherheiten bei der Ermittlung der Fahrparameter über die Zeit aus und besondere Ereignisse während der Fahrt im Fahrabschnitt, beispielsweise starke Vollbremsungen, wirken sich anteilig weniger stark aus. Bevorzugt ist entsprechend ein indirektes Profiltiefenabschätzungsverfahren, wobei die vorbestimmte Fahrdistanz im Bereich von 0,5 bis 20 km, bevorzugt im Bereich von 1 bis 10 km, liegt.

Bevorzugt ist zudem ein indirektes Profiltiefenabschätzungsverfahren, wobei das Fahrzeug einen oder mehrere Fahrparametersensoren zur Ermittlung einer Mehrzahl von Fahrparametern des Fahrzeugs während der Fahrt umfasst. Bevorzugt ist folglich ein indirektes Profiltiefenabschätzungsverfahren, wobei die Mehrzahl von Fahrparametern einen oder mehrere, bevorzugt zwei oder mehr, bevorzugt drei oder mehr, besonders bevorzugt sämtliche Fahrparameter umfasst, die ausgewählt sind aus der Gruppe bestehend aus Querbeschleunigung, Längsbeschleunigung, Z-Beschleunigung und der Fahrzeuggeschwindigkeit.

Mit Blick auf die Qualität der erhaltenen Daten und die Unmittelbarkeit der Bestimmung im Fahrabschnitt ist es nach Einschätzung der Erfinder besonders vorteilhaft, wenn die Fahrparameter zumindest teilweise, bevorzugt im Wesentlichen vollständig, über fahrzeuginterne Sensoren ermittelt werden, wobei diese in modernen Fahrzeugen häufig ohnehin zur Verfügung stehen, so dass bereits verfügbare Sensoren in synergistischer Weise in das indirekte Profiltiefenabschätzungsverfahren zur Abschätzung der Profiltiefe einbezogen werden können. Bevorzugt ist entsprechend ein indirektes Profiltiefenabschätzungsverfahren, wobei das Fahrzeug einen oder mehrere Fahrparametersensoren zur Ermittlung einer Mehrzahl von Fahrparametern des Fahrzeugs während der Fahrt umfasst, und/oder wobei das Ermitteln der Mehrzahl von Fahrparametern des Fahrzeugs durch einen oder mehrere Fahrparametersensoren des Fahrzeuges erfolgt, wobei die Fahrparametersensoren bevorzugt ausgewählt sind aus der Gruppe bestehend aus Geschwindigkeitssensoren und Beschleunigungssensoren.

Die Erfinder schlage vor, dass sich im indirekten Profiltiefenabschätzungsverfahren auch zeitabhängige Positionsdaten des Fahrzeugs, wie sie beispielweise über GPS zugänglich sind, effizient nutzen lassen. In einer besonders bevorzugten Ausführungsform können diese Daten genutzt werden, um die von Fahrzeugsensoren ermittelten Fahrparameter zu verifizieren und/oder zu korrigieren, beispielsweise in dem eine im Fahrzeug gemessene Geschwindigkeit mit der Geschwindigkeit abgeglichen wird, die aus zeitabhängigen Positionsdaten des Fahrzeuges ermittelt wird, um beispielsweise Fehler in der fahrzeugseitigen Sensorik auszugleichen. Alternativ können in weniger bevorzugten Ausgestaltungen des indirekten Profiltiefenabschätzungsverfahrens auch sämtliche für das Verfahren benötigten Fahrparameter aus den zeitabhängigen Positionsdaten ermittelt werden. Bevorzugt ist zusammenfassend ein indirektes Profiltiefenabschätzungsverfahren, wobei das Ermitteln der Mehrzahl von Fahrparametern des Fahrzeugs durch Auswertung von zeitabhängigen Positionsdaten, bevorzugt GPS-Daten, erfolgt oder dadurch unterstützt, bevorzugt dadurch unterstützt, wird, wobei die zeitabhängigen Positionsdaten bevorzugt durch eine elektronische Positionsbestimmungseinheiten erhalten werden.

Der Fachmann versteht, dass die Fahrparameter des Fahrzeugs während der Fahrt im Fahrabschnitt ermittelt werden und dass das Wort "während" hierbei eine fortgesetzte Bestimmung zu mehreren Zeitpunkten im Fahrabschnitt meint. In Übereinstimmung mit dem fachmännischen Verständnis wird die Kalkulation der zeitabhängig wirkenden Kräfte umso präziser, umso höher die zeitliche Auflösung in der Erfassung der Daten ist. Die Fahrparameter des Fahrzeugs werden, wie im Bereich der Sensor- und Messtechnik üblich, mit einer bestimmten Frequenz bestimmt, die angibt, wie oft der jeweilige Fahrparameter pro Sekunde ermittelt wird. Sehr hohe Ermittlungsfrequenzen ermöglichen dabei eine besonders vorteilhafte zeitliche Auflösung der Fahrparameter, generieren jedoch auch mehr Speicherbedarf auf der Speichereinheit der elektronischen Datenverarbeitungsvorrichtung bzw. erfordern mehr Bandbreite in der drahtlosen Übertragung und können den Energieverbrauch erhöhen. Insofern ist es in der Praxis in vielen Fällen zweckmäßig, die Ermittlungsfrequenzen eher niedrig zu halten. Insoweit schlagen die Erfinder jedoch Untergrenzen der Ermittlungsfrequenzen vor, mit denen sich in jedem Fall eine vorteilhafte und präzise Abschätzung realisieren lässt. Bevorzugt ist insoweit nämlich ein indirektes Profiltiefenabschätzungsverfahren, wobei das Ermitteln der Mehrzahl von Fahrparametern des Fahrzeugs für jeden Fahrparameter mit einer dem Fahrparameter zugeordneten Ermittlungsfrequenz erfolgt, wobei die Ermittlungsfrequenz bevorzugt 4 Hz oder mehr, besonders bevorzugt 6 Hz oder mehr, besonders bevorzugt 12 Hz oder mehr, beträgt.

In Verfahrensschritt y) werden aus den ermittelten Fahrparametern zunächst die zeitabhängigen Kräfte kalkuliert, die während der Fahrt im Fahrabschnitt auf den jeweiligen Fahrzeugreifen wirken. Bezogen auf das im Bereich der Fahrzeugreifenindustrie gebräuchliche Koordinatensystem erfolgt dies beispielsweise bezogen auf die Kraftkomponenten Fx(t), Fy(t) und Fz(t), d.h. die zeitabhängigen Kräfte in Längsrichtung, Querrichtung und radialer Z-Richtung. Die Kalkulation dieser Kräfte aus den Fahrparametern, insbesondere den ermittelten Beschleunigungen, ist für den Fachmann ausgehend von seinem Fachwissen möglich, wobei er die Methodik an die jeweiligen Anforderungen, insbesondere an die Präzision der Bestimmung, anpasst. Hierbei können beispielsweise neben vergleichsweise einfachen Kalkulationsalgorithmen auch referenzbasierte Methoden verwendet werden, die auf den Vergleich mit zuvor aufgenommenen Referenzmessungen oder Referenzsimulationen zurückgreifen, wobei auch Ansätze möglich sind, die auf maschinelles Lernen zurückgreifen. In der überwiegenden Zahl der Fälle wird der Fachmann jedoch auf Simulationsverfahren zurückgreifen, wie sie in der Branche zur Berechnung von Kräften üblich sind. Hierfür stehen dem Fachmann beispielsweise auch eine Vielzahl an kommerziell erhältlichen Software-Lösungen zur Verfügung, die der Fachmann gegebenenfalls gemäß seinen Anforderungen anpassen kann. Bevorzugt ist demnach auch ein indirektes Profiltiefenabschätzungsverfahren, wobei das Kalkulieren der im Fahrabschnitt auf den Fahrzeugreifen wirkenden Kräfte ausgehend von den ermittelten Fahrparametern durch eine elektronische Datenverarbeitungsvorrichtung mittels eines Simulationsprogramms erfolgt.

Aus den im Fahrabschnitt auf den jeweiligen Fahrzeugreifen wirkenden Kräften kann ein Maß für die Belastung der Fahrzeugreifen im Fahrabschnitt ermittelt werden, die Einfluss auf den Abrieb hat. Diese Kennzahl gibt an, wie stark -sprich scharf- die mechanische Belastung des Fahrzeugreifens im Fahrabschnitt war und wie hoch der zu erwartende Abrieb ist. Vor diesem Hintergrund wird im Rahmen des indirekten Profiltiefenabschätzungsverfahren zweckmäßigerweise von der Abriebsschärfezahl gesprochen. In Übereinstimmung mit dem fachmännischen Verständnis ist dabei in der praktischen Umsetzung des indirekten Profiltiefenabschätzungsverfahren jedoch der genaue Name dieses Parameters ebenso wenig relevant, wie die programmiertechnische Umsetzung des Parameters. Beispielsweise ist es denkbar, dass die Abriebsschärfezahl je nach Berechnungsmethode unterschiedliche Dimensionen aufweist oder sogar als Satz von mehreren Abriebsschärfezahlen erzeugt wird. Maßgeblich ist für die Abriebsschärfezahl in Übereinstimmung mit dem fachmännischen Verständnis lediglich, dass die Abriebsschärfezahl ein aus den kalkulierten zeitabhängigen Kräften bestimmtes Maß für die abriebsrelevante mechanische Belastung des jeweiligen Fahrzeugreifens ist, die dieser im Fahrabschnitt erfahren hat.

In dem indirekten Profiltiefenabschätzungsverfahren erfolgt das Kalkulieren der im Fahrabschnitt auf den Fahrzeugreifen wirkenden Kräfte sowie die Berechnung der dem Fahrabschnitt zugeordneten Abriebsschärfezahl aus den kalkulierten Kräften, jeweils unter Berücksichtigung eine Mehrzahl von Einflussparametern. Diese Einflussparameter, bei denen es sich um Fahrzeugparameter, Umgebungsparameter und Reifenparameter handelt, beeinflussen somit die Kalkulation der Kräfte und/oder die Berechnung der dem Fahrabschnitt zugeordneten Abriebsschärfezahl, wobei die Erfinder es für das bevorzugte indirekte Profiltiefenabschätzungsverfahren für zielführend erachten, dass diese Einflussparameter in jedem Fall Informationen über das Laufstreifenmaterial des Fahrzeugreifens sowie über die Anfangsprofiltiefe am Anfang des Fahrabschnitts umfassen sollte, welche, wie vorstehend erläutert, wiederum nach Korrektur im erfindungsgemäßen Verfahren erhalten werden kann.

Hierbei werden die Fahrzeugparameter nach Einschätzung der Erfinder in zweckmäßiger Weise überwiegend, bzw. in einigen Fällen ggf. sogar ausschließlich, beim Kalkulieren der im Fahrabschnitt auf den Fahrzeugreifen wirkenden Kräfte berücksichtigt, wobei die Fahrzeugparameter, bspw. Informationen zu den Fahrwerkseigenschaften, insbesondere als Eingabe in die Simulation der Kräfte eingehen können. Die Umgebungsparameter und Reifenparameter werden im Gegenzug eher bei der Bestimmung der Abriebsschärfezahl eingehen, beispielsweise weil die Auswirkung einer Abriebsschärfezahl im Lichte der herrschenden Umgebungstemperarturen und dem Reifentyp, beispielsweise Winterreifen, bestimmt wird.

Bevorzugt ist bei Berücksichtigung von Fahrzeugparametern ein indirektes Profiltiefenabschätzungsverfahren, wobei die Fahrzeugparameter ausgewählt sind aus der Gruppe bestehend aus Informationen zum Radstand, zur Spurbreite, zum Fahrzeuggewicht, zur Radlast, zum Reifensturz, zum Schräglauf, zur Antriebsart und zum Antriebskonzept. Bevorzugt ist bei Berücksichtigung von Fahrzeugparametern zusätzlich oder alternativ ein indirektes Profiltiefenabschätzungsverfahren, wobei die Fahrzeugparameter in Abhängigkeit vom Fahrzeugtyp und/oder von der Fahrzeugkonfiguration bereitgestellt werden, bevorzugt auf der Speichereinheit einer elektronische Datenverarbeitungsvorrichtung.

Die Berücksichtigung von Umgebungsparametern ist nach Einschätzung der Erfinder besonders dann vorteilhaft, wenn die in einem Anwendungsszenario zu erwartenden Umweltbedingungen deutlich von denen abweichen, für die das indirekte Profiltiefenabschätzungsverfahren optimiert wurde, beispielsweise weil Referenzmessungen in Regionen mit gemäßigtem Klima durchgeführt wurden, das indirekte Profiltiefenabschätzungsverfahren jedoch in einer tropischen oder arktischen Region eingesetzt werden soll. Zudem ist eine Berücksichtigung von Umgebungsparametern zweckmäßig, wenn im Anwendungsszenario größere Variationen in den Umgebungsbedingungen zu erwarten sind, beispielsweise in Folge von ausgeprägten Jahreszeitenwechseln. Die Berücksichtigung kann nach Einschätzung der Erfinder in vielen Fällen besonders leicht erfolgten, beispielsweise als Skalierungsfaktoren für den sich ergebenden Abrieb, die beispielsweise aus Referenzmessungen bei unterschiedlichen Umweltbedingungen erhalten werden können. Bevorzugt ist damit ein indirektes Profiltiefenabschätzungsverfahren, wobei das Kalkulieren der im Fahrabschnitt auf den Fahrzeugreifen wirkenden Kräfte und/oder das Bestimmen der dem Fahrabschnitt zugeordneten Abriebsschärfezahl, bevorzugt das Bestimmen der dem Fahrabschnitt zugeordneten Abriebsschärfezahl, aus den kalkulierten Kräften unter Berücksichtigung eines oder mehrerer, bevorzugt zwei oder mehr, besonders bevorzugt drei oder mehr, Umgebungsparameter erfolgt. Bevorzugt ist insoweit ein erfindungsgemäßes drittes Verfahren, wobei die Umgebungsparameter ausgewählt sind aus der Gruppe bestehend aus Informationen zur Umgebungstemperatur, zur Untergrundbeschaffenheit und zur Witterung.

Bevorzugt ist ein indirektes Profiltiefenabschätzungsverfahren, wobei die Umgebungsparameter zumindest teilweise durch einen oder mehrere Umgebungssensoren des Fahrzeuges erhalten werden und/oder wobei die weiteren Umgebungsparameter zumindest teilweise durch Abgleich von zeitabhängigen Positionsdaten, bevorzugt GPS-Daten, mit ortsaufgelösten Umgebungsdaten erhalten werden, wobei die zeitabhängigen Positionsdaten bevorzugt durch eine elektronische Positionsbestimmungseinheiten erhalten werden.

Nach Einschätzung der Erfinder sollten im indirekten Profiltiefenabschätzungsverfahren bereits zumindest zwei Reifenparameter berücksichtigt werden, nämlich die Informationen über das Laufstreifenmaterial des Fahrzeugreifens und die Anfangsprofiltiefe des Fahrzeugreifens am Anfang des Fahrabschnitts.

Der erste dieser Reifenparameter ist nach Einschätzung der Erfinder wichtig, da die Materialeigenschaften des Laufstreifens maßgeblich für den zu erwartenden Abrieb mitverantwortlich sind. Das Laufstreifenmaterial kann insbesondere durch den Vergleich mit Referenzmessungen an ähnlichen oder identischen Laufstreifenmaterialien berücksichtigt werden, beispielsweise wenn in Referenzexperimenten für ein oder mehrere charakteristische Materialien ein Referenzabriebsverhalten unter geeigneten Abriebsschärfezahlen, ggf. unter spezifischen Umgebungs- bzw. Straßentemperaturen, bestimmt wird. Bevorzugt ist dementsprechend auch ein indirektes Profiltiefenabschätzungsverfahren, wobei die Informationen über das Laufstreifenmaterial des Fahrzeugreifens Informationen zu physikalischchemischen Eigenschaften des Laufstreifenmaterials, bevorzugt zur Glasübergangstemperatur des im Laufstreifen eingesetzten Polymers und/oder zum Abriebswiderstand des Laufstreifens, bevorzugt zum Abriebswiderstand des Laufstreifens, umfassen.

Der zweite dieser Reifenparameter ist wichtig, da die jeweilige Abriebsrate auch von der aktuellen Profiltiefe abhängt. Dies wird häufig auf die unterschiedliche Steifigkeit der einzelnen Profilklötze in Abhängigkeit von der Profiltiefe und auf das dadurch bedingte unterschiedliche "Ausschnappverhalten" beim Austreten aus der Bodenaufstandsfläche zurückgeführt. Insbesondere an dieser Stelle zeigen sich synergistische Vorteile bei der Kombination des indirekten Profiltiefenabschätzungsverfahren mit dem erfindungsgemäßem Verfahren, mit welchem korrigierte Profiltiefeninformationen als verbesserte Ausgangswerte für die Abschätzung herangezogen werden können.

Die Berücksichtigung dieses Reifenparameters ist dabei in vorteilhafter Weise regelmäßig nicht mit Mehraufwand verbunden, da die Anfangsprofiltiefe am Anfang des Fahrabschnitts in den meisten Fällen ohnehin als Ausgangsgröße für die Berechnung der Endprofiltiefe herangezogen werden wird, da Informationen über absolute Profiltiefen in der Praxis häufig gegenüber lediglich relativen Veränderungen bevorzugt werden.

Zum Erhalt der für das indirekte Profiltiefenabschätzungsverfahren benötigten Information über die Anfangsprofiltiefe des Fahrzeugreifens am Anfang des Fahrabschnitts sehen die Erfinder insbesondere zwei Optionen, wobei die Bestimmung der Anfangsprofiltiefe am Anfang des Fahrabschnitts durch tatsächliche Messung, beispielsweise händisch durch den Fahrzeugführer, regelmäßig besonders genaue Ergebnisse in der Abschätzung der späteren Endprofiltiefe liefert. Da dieses Vorgehen in der Praxis allerdings nur für den jeweils ersten Fahrabschnitt jeder Fahrt praktikabel ist, ist diese Verfahrensführung weniger bevorzugt. Vor allem für bestimmte Anwendungen mit hohen Anforderungen an die Präzision der Abschätzung bevorzugt ist ein indirektes Profiltiefenabschätzungsverfahren, wobei die Anfangsprofiltiefe am Anfang des Fahrabschnitts vor dem Fahrabschnitt gemessen wird.

Insbesondere mit Blick auf die Arbeitsbelastung des Fahrzeugführers bevorzugt ist es hingegen, wenn das Ergebnis einer ersten Abschätzung im indirekten Profiltiefenabschätzungsverfahren, welches gegebenenfalls im erfindungsgemäßen Verfahren korrigiert wird, um beispielsweise erfolgte Rangiermanöver zu berücksichtigen, nachfolgend in dem sich anschließenden Fahrabschnitt als Ausgangspunkt verwendet wird, was vorteilhafterweise so weit geführt werden kann, dass die initiale Eingabe der Ausgangsprofiltiefe lediglich einmal erfolgt, bspw. beim Reifenwechsel, und das indirekte Profiltiefenabschätzungsverfahren nachfolgend jeweils mit Werten weiterarbeitet, die es zuvor als Ergebnis einer Abschätzung erhalten hat, wobei diese Werte jeweils bevorzugt im erfindungsgemäßen Verfahren in Abhängigkeit von der detektierten Ausrichtungsänderung des Fahrzeuges korrigiert werden. Besonders bevorzugt ist entsprechend ein indirektes Profiltiefenabschätzungsverfahren, wobei das Verfahren für zwei oder mehr Fahrabschnitte durchgeführt wird, wobei für die Anfangsprofiltiefe am Anfang des zweiten oder eines weiteren Fahrabschnitts die für den vorangegangenen Fahrabschnitt abgeschätzte Endprofiltiefe am Ende des vorangegangenen Fahrabschnitts verwendet wird, wobei die Endprofiltiefe gegebenenfalls in Abhängigkeit von der detektierten Änderung der Ausrichtung des Fahrzeuges im Zeitintervall des Fahrabschnittes korrigiert wird.

Neben den sinnvollerweise in jedem Fall zu berücksichtigenden Reifenparametern kann es zweckmäßig sein, für eine weitere Steigerung der Präzision weitere Reifenparameter zu berücksichtigen. Bevorzugt ist ein indirektes Profiltiefenabschätzungsverfahren, wobei das Kalkulieren der im Fahrabschnitt auf den Fahrzeugreifen wirkenden Kräfte und/oder das Bestimmen der dem Fahrabschnitt zugeordneten Abriebsschärfezahl, bevorzugt das Bestimmen der dem Fahrabschnitt zugeordneten Abriebsschärfezahl, unter Berücksichtigung von drei oder mehr, bevorzugt vier oder mehr, besonders bevorzugt fünf oder mehr, Reifenparametern erfolgt.

Bevorzugt ist dabei ein indirektes Profiltiefenabschätzungsverfahren, wobei die Reifenparameter ausgewählt sind aus der Gruppe bestehend aus Informationen zur Reifengröße, zum Reifendruck, zur Profilgeometrie und zur Reifensteifigkeit. Bevorzugt ist zusätzlich oder alternativ ein erfindungsgemäßes drittes Verfahren, wobei die Reifenparameter in Abhängigkeit vom Reifentyp und/oder der Reifenkonfiguration der Fahrzeugreifen bereitgestellt werden, bevorzugt auf der Speichereinheit einer elektronische Datenverarbeitungsvorrichtung.

In Verfahrensschritt z) des indirekten Profiltiefenabschätzungsverfahrens wird die Endprofiltiefe am Ende des Fahrabschnitts ausgehend von der Anfangsprofiltiefe am Anfang des Fahrabschnitts unter Berücksichtigung der jeweiligen Abriebsschärfezahl abgeschätzt und kann als Profiltiefeninformation gespeichert werden.

Hierfür stehen dem Fachmann eine Vielzahl von Optionen zur Verfügung. Die Abschätzung kann beispielsweise durch Abgleich mit Daten erfolgen, die in Referenzmessungen für Fahrzeugreifen mit entsprechenden Abriebsschärfezahlen aufgenommen wurden, wobei beispielsweise eine relative Änderung der Profiltiefe und/oder eine Reduktion der Profiltiefe um einen absoluten Wert und/oder eine resultierende Endprofiltiefe erhalten werden können. Bevorzugt ist insoweit ein indirektes Profiltiefenabschätzungsverfahren, wobei die Referenzfahrzeugreifen hinsichtlich zumindest eines, bevorzugt hinsichtlich der überwiegenden Zahl, besonders bevorzugt hinsichtlich sämtlicher, Reifenparameter, bevorzugt zumindest hinsichtlich des Laufstreifenmaterials, im Wesentlichen den Reifenparametern der im indirekten Profiltiefenabschätzungsverfahren zu bewertenden Fahrzeugreifen entsprechen. Bevorzugt ist insoweit zusätzlich oder alternativ auch ein indirektes Profiltiefenabschätzungsverfahren, wobei die Referenzabriebsschärfezahl in einem Referenzverfahren kalkuliert wird, welches hinsichtlich zumindest eines, bevorzugt hinsichtlich der überwiegenden Zahl, besonders bevorzugt hinsichtlich sämtlicher, Fahrzeugparameter im Wesentlichen den Fahrzeugparametern des Profiltiefenabschätzungsverfahren entspricht.

Zudem kann die Abschätzung der Endprofiltiefe im indirekten Profiltiefenabschätzungsverfahren durch den Einsatz von maschinellem Lernen erfolgen, wobei der Fachmann beispielsweise entsprechende kommerziell erhältliche Programme im Rahmen eines überwachten Lernens mit bekannten Abriebsschärfezahlen und zugehörigen Abriebswerten sowie ggf. weiteren Einflussparametern aus Referenzexperimenten trainieren kann. Bevorzugt ist in diesem Fall ein indirektes Profiltiefenabschätzungsverfahren, wobei die Abschätzung der Endprofiltiefe am Ende des Fahrabschnitts mit einem auf maschinellem Lernen basierenden Abschätzungsmodul erfolgt, welches auf der Speichereinheit einer elektronischen Datenverarbeitungsvorrichtung gespeichert ist, wobei die elektronische Datenverarbeitungsvorrichtung dazu eingerichtet ist, die Fahrdistanz im Fahrabschnitt, die bestimmte Abriebsschärfezahl des Fahrzeugreifens im Fahrabschnitt und die Anfangsprofiltiefe am Anfang des Fahrabschnitts sowie optional weitere der Einflussparameter, als Eingabe in das Abschätzungsmodul zu geben und die Endprofiltiefe ausgehend von der Eingabe abzuschätzen, wobei das Abschätzungsmodul dazu trainiert ist, aus der Fahrdistanz im Fahrabschnitt, der bestimmten Abriebsschärfezahl des Fahrzeugreifens im Fahrabschnitt und der Anfangsprofiltiefe am Anfang des Fahrabschnitts sowie optional weiteren der Einflussparameter, die Endprofiltiefe am Ende des Fahrabschnitts abzuschätzen, wobei das Training mit einem Satz von Trainingsdaten erfolgt, welches eine Vielzahl von bekannten Profiltiefen umfasst, die ausgehend von bekannten Ausgangsprofiltiefen in Folge von bekannten Abriebsschärfezahlen nach bekannten Fahrdistanzen erhalten wurden. Bevorzugt ist dabei ein indirektes Profiltiefenabschätzungsverfahren, wobei das Training mit einem Satz von Trainingsdaten erfolgt, die hinsichtlich zumindest eines, bevorzugt hinsichtlich der überwiegenden Zahl, besonders bevorzugt hinsichtlich sämtlicher, Einflussparameter den Einflussparametern des indirekten Profiltiefenabschätzungsverfahren entsprechen.

Die Erfindung betrifft zudem ein Fahrzeugsystem, welches spezifisch für die Durchführung des erfindungsgemäßen Verfahrens ausgelegt ist, nämlich ein Fahrzeugsystem, insbesondere zur Durchführung des erfindungsgemäßen Verfahrens, umfassend:
i) ein Fahrzeug mit zumindest einem Fahrzeugreifen,
ii) eine elektronische Datenverarbeitungsvorrichtung mit einer Speichereinheit, und
iii) einen Ausrichtungssensor zum Detektieren der zeitabhängigen Ausrichtung des Fahrzeuges,
wobei die elektronische Datenverarbeitungsvorrichtung dazu eingerichtet ist, eine für den Fahrzeugreifen des Fahrzeuges auf der Speichereinheit der elektronischen Datenverarbeitungsvorrichtung gespeicherte Profiltiefeninformation in Abhängigkeit von der vom Ausrichtungssensor in einem Zeitintervall detektierten Änderung der Ausrichtung des Fahrzeuges zu korrigieren.

Nachfolgend werden die Erfindung und bevorzugte Ausführungsformen der Erfindung unter Bezugnahme auf die beiliegende Figur näher erläutert und beschrieben. Dabei zeigt:

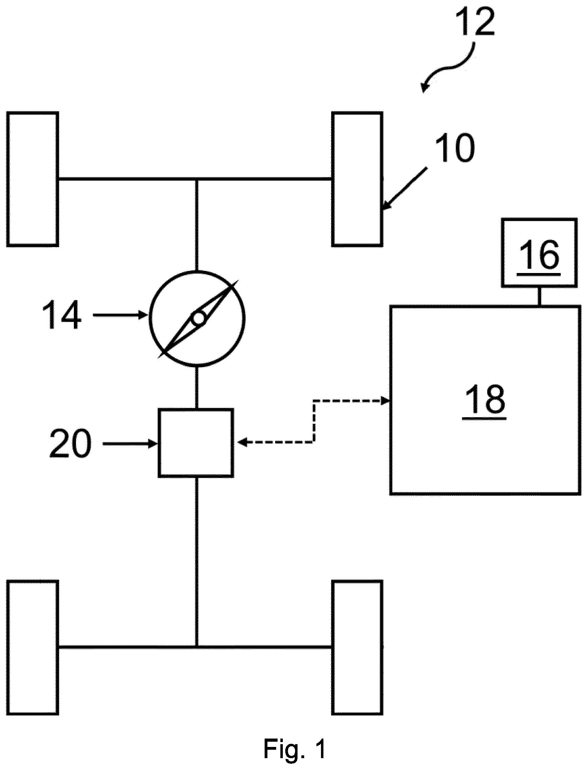

- Fig. 1: eine schematische Darstellung eines erfindungsgemäßen Fahrzeugsystems, welches spezifisch für die Durchführung des erfindungsgemäßen Verfahrens ausgelegt ist, in einer bevorzugten Ausführungsform.

Fig. 1 zeigt eine schematische Darstellung eines erfindungsgemäßen Fahrzeugsystems, welches spezifisch für die Durchführung des erfindungsgemäßen Verfahrens ausgelegt ist, in einer bevorzugten Ausführungsform.

Das beispielhafte Fahrzeug 12 des Fahrzeugsystems kann beispielsweise ein LKW sein und umfasst einen Fahrzeugreifen 10, dessen Profiltiefe abgeschätzt werden soll.

Das Fahrzeug 12 umfasst einen Ausrichtungssensor 14, welcher im gezeigten Beispiel als elektronischer Magnetkompass ausgeführt ist. Der Ausrichtungssensor 14 ist als Bestandteil des Fahrzeugs 12 ausgeführt und erlaubt die Detektion der Ausrichtung des Fahrzeugs und damit insbesondere die Registrierung von Rangiermanövern bei geringen Geschwindigkeiten bzw. geringen Änderungen der Position des Fahrzeugschwerpunktes.

Die von dem Ausrichtungssensor 14 gesammelten Daten werden im gezeigten Beispiel der Fig. 1 durch die elektronische Datenverarbeitungsvorrichtung 18, welche eine Speichereinheit 16 umfasst, verarbeitet. Die elektronische Datenverarbeitungsvorrichtung 18 und die Speichereinheit 16 sind dabei Bestandteil einer vom Fahrzeug separaten Vorrichtung, die im gezeigten Beispiel als Mobiltelefon ausgeführt ist, welches beispielsweise in der Fahrerkabine angeordnet werden kann. Die von dem Ausrichtungssensor 14 gesammelten Daten werden mittels einer elektronischen Kommunikationsanordnung 20 in einem nahreichweitigen drahtlosen Kommunikationsverfahren an das mobile Endgerät übermittelt, beispielsweise mittels Bluetooth.

Im gezeigten Beispiel ist auf der Speichereinheit 16 für sämtliche Fahrzeugreifen 10 des Fahrzeugs 12 jeweils eine Profiltiefeninformation gespeichert, die insbesondere die mittlere absolute Profiltiefe der zentralen umlaufenden Profilrille der Fahrzeugreifen 10 umfasst.

Wenn das Fahrzeug 12 nunmehr in einem beobachteten Zeitintervall lediglich entlang der Längsrichtung translatorisch bewegt wird, detektiert der Ausrichtungssensor 14, zumindest auf den praxisrelevanten Entfernungsskalen, keine Ausrichtungsänderung und im erfindungsgemäßen Verfahren muss keine Korrektur der hinterlegten Profiltiefeninformationen erfolgen, so dass eine etwaige Aktualisierung der Profiltiefeninformationen ggf. ausschließlich durch ein eingesetztes indirektes Profiltiefenabschätzungsverfahren erfolgt.

Sofern in einem beobachteten Zeitintervall jedoch eine Ausrichtungsänderung des Fahrzeugs 12 mit dem Ausrichtungssensor 14 registriert wird, werden die auf der Speichereinheit 16 gespeicherten Profiltiefeninformationen korrigiert, wobei insbesondere auch eine reifenspezifische Korrektur in Abhängigkeit der Position des jeweiligen Fahrzeugreifen 10 im Fahrwerk des Fahrzeugs 12 erfolgen kann, beispielsweise um die linken und rechten Fahrzeugreifen 10 bei einer registrierten Rechtskurve unterschiedlich stark zu korrigieren, um den verschiedenen Belastungssituationen in diesem Szenario Rechnung zu tragen.

In einem beispielhaften Korrekturverfahren können nur solche Bewegungen des Fahrzeugs 12 in einem Zeitintervall berücksichtigt werden, die mit einem Mindestmaß der Ausrichtungsänderung verbunden sind, die erfolgt, ohne dass die Geschwindigkeit des Fahrzeugs 12 oder dessen Positionsänderung einen gewissen Grenzwert überschreitet. Solche Bewegungen können unter Berücksichtigung der charakteristischen Verläufe der Ausrichtungsänderung in Kombination mit Informationen über die jeweilige Geschwindigkeit bzw. Positionsänderung während der Ausrichtungsänderung beispielsweise in Bewegungsklassen einer Klassifikation eingeteilt werden.

Wird im erfindungsgemäßen Verfahren nunmehr eine Ausrichtungsänderung des Fahrzeugs 12 registriert, die beispielsweise in die Bewegungsklasse eines seitlichen Einparkvorgangs fällt, so kann die für die Fahrzeugreifen 10 des Fahrzeugs 12 hinterlegte Profiltiefeninformation beispielsweise um einen vorher festgelegten, für seitliche Einparkmanöver spezifischen Wert korrigiert werden. In diesem theoretischen Beispiel kann auch das sich nach einer Standphase anschließende Ausparkmanöver über den Ausrichtungssensor 14 detektiert werden, gegebenenfalls im Zusammenspiel mit weiteren Sensoren, insbesondere Geschwindigkeits- und/oder Positionssensoren. Dies kann wiederum eine entsprechende erneute Korrektur der hinterlegten Profiltiefeninformation bewirken.

Die so erhaltene, im erfindungsgemäßen Verfahren zumindest zweifach korrigierte Profiltiefeninformation der Fahrzeugreifen 10 kann dann beispielsweise als Ausgangswert für ein indirektes Profiltiefenabschätzungsverfahren, insbesondere ein parameterbasiertes indirektes Profiltiefenabschätzungsverfahren unter Berücksichtigung von Abriebschärfekennzahlen, verwendet werden, indem insbesondere die während der anschließenden Fahrt zurückgelegte Fahrtstrecke verwendet wird, um aus den zuvor korrigierten Profiltiefeninformationen neue Profiltiefeninformationen abzuleiten, welche Informationen über den Profilzustand am Ende der Fahrstrecke umfassen und welche wiederum auf der Speichereinheit 16 gespeichert werden können.

In der Fortsetzung der vorstehend beschriebenen Verfahrensweise können die so erhaltenen neuen Profiltiefeninformationen im erfindungsgemäßen Verfahren wiederum korrigiert werden, beispielsweise um ein am Ende der Fahrstrecke durchgeführtes Rangiermanöver zu berücksichtigen. Auf diese Weise werden im Zusammenspiel aus dem indirekten Profiltiefenabschätzungsverfahren mit dem erfindungsgemäßen Verfahren zur Korrektur von gespeicherten Profiltiefeninformationen besonders genaue Abschätzungen zu den Profiltiefen der Fahrzeugreifen 10 erhalten, ohne dass ein manuelles Vermessen der Fahrzeugreifen 10 notwendig wäre.

### Bezugszeichenliste

- 10: Fahrzeugreifen
- 12: Fahrzeug
- 14: Ausrichtungssensor
- 16: Speichereinheit
- 18: elektronische Datenverarbeitungsvorrichtung
- 20: elektronische Kommunikationseinheit

## Patentansprüche

1. Verfahren zur Abschätzung der Profiltiefe von Fahrzeugreifen (10) bei einem Fahrzeug (12), umfassend die Verfahrensschritte:
a) Bewegen des Fahrzeuges (12) in einem Zeitintervall,
b) Detektieren der zeitabhängigen Ausrichtung des Fahrzeuges (12) mit einem Ausrichtungssensor (14), mit dem die Ausrichtung des Fahrzeugs (12) relativ zum Erdmagnetfeld oder zur Erdrotationsachse detektiert werden kann, im Zeitintervall, und
c) Korrigieren einer für einen Fahrzeugreifen (10) des Fahrzeuges (12) auf einer Speichereinheit (16) einer elektronischen Datenverarbeitungsvorrichtung (18) gespeicherten Profiltiefeninformation in Abhängigkeit von der detektierten Änderung der Ausrichtung des Fahrzeuges (12) im Zeitintervall, wobei das Bewegen des Fahrzeuges (12) im Zeitintervall eine Veränderung der Ausrichtung des Fahrzeuges (12) um 15° oder mehr, bevorzugt 30° oder mehr, besonders bevorzugt 45° oder mehr, umfasst, bezogen auf die Längsachse des Fahrzeugs (12), wobei die Änderung der Ausrichtung bei einer mittleren Fahrzeuggeschwindigkeit von 10 km/h oder weniger, bevorzugt 5 km/h oder weniger, besonders bevorzugt 2,5 km/h oder weniger, erfolgt und wobei die Änderung der Ausrichtung bei einer maximalen Änderung der Position des Fahrzeugschwerpunktes von 20 m oder weniger, bevorzugt 10 m oder weniger, besonders bevorzugt 5 m oder weniger, erfolgt.

2. Verfahren nach Anspruch 1, wobei das Bewegen des Fahrzeuges (12) im Zeitintervall eine Rangierbewegung oder Parkbewegung umfasst.

3. Verfahren nach einem der Ansprüche 1 oder 2, wobei das Detektieren der zeitabhängigen Ausrichtung des Fahrzeuges (12) mit einer Messfrequenz von 0,1 Hz oder mehr erfolgt.

4. Verfahren nach einem der Ansprüche 1 bis 3, wobei das Detektieren der zeitabhängigen Ausrichtung des Fahrzeuges (12) mit einer Messfrequenz von 5 Hz oder weniger erfolgt.

5. Verfahren nach einem der Ansprüche 1 bis 4, wobei der Ausrichtungssensor (14) die Ausrichtung des Fahrzeuges (12) relativ zum Erdmagnetfeld detektiert.

6. Verfahren nach einem der Ansprüche 1 bis 5, wobei der Ausrichtungssensor (14) die Ausrichtung des Fahrzeuges (12) relativ zur Erdrotationsachse detektiert.

7. Verfahren nach einem der Ansprüche 1 bis 6, wobei die elektronische Datenverarbeitungsvorrichtung (18) Bestandteil eines vom Fahrzeug (12) separaten Gerätes ist, wobei das Fahrzeug (12) im Falle eines als Bestandteil des Fahrzeuges (12) ausgeführten Ausrichtungssensors (14) eine elektronische Kommunikationseinheit (20) zur drahtlosen Kommunikation mit der elektronische Datenverarbeitungsvorrichtung (18) im separaten Gerät umfasst.

8. Verfahren nach einem der Ansprüche 1 bis 7, wobei der Ausrichtungssensor (14) Bestandteil einer vom Fahrzeug (12) separaten und im Fahrzeug (12) angeordneten Vorrichtung ist.

9. Verfahren nach einem der Ansprüche 1 bis 8, wobei die auf der Speichereinheit (16) gespeicherte Profiltiefeninformation mit einem von der elektronischen Datenverarbeitungsvorrichtung (18) durchgeführten indirekten Profiltiefenabschätzungsverfahren berechnet wird.

10. Fahrzeugsystem, insbesondere zur Durchführung des Verfahrens nach einem der Ansprüche 1 bis 9, umfassend:
i) ein Fahrzeug (12) mit zumindest einem Fahrzeugreifen (10),
ii) eine elektronische Datenverarbeitungsvorrichtung (18) mit einer Speichereinheit (16), und
iii) einen Ausrichtungssensor (14) zum Detektieren der zeitabhängigen Ausrichtung des Fahrzeuges (12) relativ zum Erdmagnetfeld oder zur Erdrotationsachse,
wobei die elektronische Datenverarbeitungsvorrichtung (18) dazu eingerichtet ist, eine für den Fahrzeugreifen (10) des Fahrzeuges (12) auf der Speichereinheit (16) der elektronischen Datenverarbeitungsvorrichtung (18) gespeicherte Profiltiefeninformation in Abhängigkeit von der vom Ausrichtungssensor (14) in einem Zeitintervall detektierten Änderung der Ausrichtung des Fahrzeuges (12) zu korrigieren, wobei das Bewegen des Fahrzeuges (12) im Zeitintervall eine Veränderung der Ausrichtung des Fahrzeuges (12) um 15° oder mehr, bevorzugt 30° oder mehr, besonders bevorzugt 45° oder mehr, umfasst, bezogen auf die Längsachse des Fahrzeugs (12), wobei die Änderung der Ausrichtung bei einer mittleren Fahrzeuggeschwindigkeit von 10 km/h oder weniger, bevorzugt 5 km/h oder weniger, besonders bevorzugt 2,5 km/h oder weniger, erfolgt und wobei die Änderung der Ausrichtung bei einer maximalen Änderung der Position des Fahrzeugschwerpunktes von 20 m oder weniger, bevorzugt 10 m oder weniger, besonders bevorzugt 5 m oder weniger, erfolgt.

## Claims

1. Method for estimating the tread depth of vehicle tyres (10) on a vehicle (12), comprising the method steps of:
a) moving the vehicle (12) in a time interval,
b) detecting the time-dependent orientation of the vehicle (12) in the time interval using an orientation sensor (14) that can be used to detect the orientation of the vehicle (12) relative to the earth's magnetic field or the earth's rotation axis, and
c) correcting tread depth information stored for a vehicle tyre (10) of the vehicle (12) in a storage unit (16) of an electronic data processing device (18) on the basis of the detected change in the orientation of the vehicle (12) in the time interval, wherein the movement of the vehicle (12) in the time interval comprises a change in the orientation of the vehicle (12) by 15° or more, preferably 30° or more, particularly preferably 45° or more, based on the longitudinal axis of the vehicle (12), wherein the change in the orientation takes place at an average vehicle speed of 10 km/h or less, preferably 5 km/h or less, particularly preferably 2.5 km/h or less, and wherein the change in the orientation takes place for a maximum change in the position of the vehicle centre of gravity of 20 m or less, preferably 10 m or less, particularly preferably 5 m or less.

2. Method according to Claim 1, wherein the movement of the vehicle (12) in the time interval comprises a manoeuvring movement or parking movement.

3. Method according to either of Claims 1 and 2, wherein the time-dependent orientation of the vehicle (12) is detected at a measurement frequency of 0.1 Hz or more.

4. Method according to one of Claims 1 to 3, wherein the time-dependent orientation of the vehicle (12) is detected at a measurement frequency of 5 Hz or less.

5. Method according to one of Claims 1 to 4, wherein the orientation sensor (14) detects the orientation of the vehicle (12) relative to the earth's magnetic field.

6. Method according to one of Claims 1 to 5, wherein the orientation sensor (14) detects the orientation of the vehicle (12) relative to the earth's rotation axis.

7. Method according to one of Claims 1 to 6, wherein the electronic data processing device (18) is part of an apparatus separate from the vehicle (12), wherein, in the case of an orientation sensor (14) implemented as part of the vehicle (12), the vehicle (12) comprises an electronic communication unit (20) for wirelessly communicating with the electronic data processing device (18) in the separate apparatus.

8. Method according to one of Claims 1 to 7, wherein the orientation sensor (14) is part of an apparatus that is separate from the vehicle (12) and is arranged in the vehicle (12).

9. Method according to one of Claims 1 to 8, wherein the tread depth information stored in the storage unit (16) is calculated with an indirect tread depth estimation method carried out by the electronic data processing device (18).

10. Vehicle system, in particular for carrying out the method according to one of Claims 1 to 9, comprising:
i) a vehicle (12) having at least one vehicle tyre (10),
ii) an electronic data processing device (18) having a storage unit (16), and
iii) an orientation sensor (14) for detecting the time-dependent orientation of the vehicle (12) relative to the earth's magnetic field or the earth's rotation axis, wherein the electronic data processing device (18) is configured to correct tread depth information stored for the vehicle tyre (10) of the vehicle (12) in the storage unit (16) of the electronic data processing device (18) on the basis of the change in the orientation of the vehicle (12), as detected by the orientation sensor (14) in a time interval, wherein the movement of the vehicle (12) in the time interval comprises a change in the orientation of the vehicle (12) by 15° or more, preferably 30° or more, particularly preferably 45° or more, based on the longitudinal axis of the vehicle (12), wherein the change in the orientation takes place at an average vehicle speed of 10 km/h or less, preferably 5 km/h or less, particularly preferably 2.5 km/h or less, and wherein the change in the orientation takes place for a maximum change in the position of the vehicle centre of gravity of 20 m or less, preferably 10 m or less, particularly preferably 5 m or less.

## Revendications

1. Procédé d'estimation de la profondeur de sculpture de pneumatiques de véhicule (10) sur un véhicule (12), comprenant les étapes de procédé consistant à :
a) déplacer le véhicule (12) au cours d'un intervalle de temps,
b) détecter l'orientation dépendant du temps du véhicule (12) au moyen d'un capteur d'orientation (14), avec lequel l'orientation du véhicule (12) par rapport au champ magnétique terrestre ou à l'axe de rotation de la Terre peut être détectée, au cours de l'intervalle de temps, et
c) corriger une information de profondeur de sculpture stockée pour un pneumatique de véhicule (10) du véhicule (12) sur une unité de stockage (16) d'un dispositif de traitement de données électronique (18) en fonction de la variation d'orientation du véhicule (12) détectée au cours de l'intervalle de temps, le déplacement du véhicule (12) au cours de l'intervalle de temps comprenant une variation de l'orientation du véhicule (12) d'au moins 15°, de préférence d'au moins 30°, plus préférentiellement d'au moins 45°, par rapport à l'axe longitudinal du véhicule (12), la variation d'orientation ayant lieu à une vitesse moyenne du véhicule de 10 km/h ou moins, de préférence 5 km/h ou moins, plus préférentiellement 2,5 km/h ou moins, et la variation d'orientation ayant lieu lors d'une variation maximale de la position du centre de gravité du véhicule de 20 m ou moins, de préférence 10 m ou moins, plus préférentiellement 5 m ou moins.

2. Procédé selon la revendication 1, dans lequel le déplacement du véhicule (12) au cours de l'intervalle de temps comprend une manœuvre ou un mouvement de stationnement.

3. Procédé selon l'une des revendications 1 ou 2, dans lequel la détection de l'orientation dépendant du temps du véhicule (12) a lieu avec une fréquence de mesure d'au moins 0,1 Hz.

4. Procédé selon l'une des revendications 1 à 3, dans lequel la détection de l'orientation dépendant du temps du véhicule (12) a lieu avec une fréquence de mesure d'au plus 5 Hz.

5. Procédé selon l'une des revendications 1 à 4, dans lequel le capteur d'orientation (14) détecte l'orientation du véhicule (12) par rapport au champ magnétique terrestre.

6. Procédé selon l'une des revendications 1 à 5, dans lequel le capteur d'orientation (14) détecte l'orientation du véhicule (12) par rapport à l'axe de rotation de la Terre.

7. Procédé selon l'une des revendications 1 à 6, dans lequel le dispositif de traitement de données électronique (18) fait partie intégrante d'un appareil séparé du véhicule (12), le véhicule (12) comprenant, dans le cas où le capteur d'orientation (14) est conçu en tant que partie intégrante du véhicule (12), une unité de communication électronique (20) pour la communication sans fil avec le dispositif de traitement de données électronique (18) dans l'appareil séparé.

8. Procédé selon l'une des revendications 1 à 7, dans lequel le capteur d'orientation (14) fait partie intégrante d'un dispositif séparé du véhicule (12) et disposé dans le véhicule (12).

9. Procédé selon l'une des revendications 1 à 8, dans lequel les informations concernant la profondeur de sculpture stockées sur l'unité de stockage (16) sont calculées par un procédé indirect d'estimation de la profondeur de sculpture mis en œuvre par le dispositif de traitement de données électronique (18).

10. Système de véhicule, en particulier pour la mise en œuvre du procédé selon l'une des revendications 1 à 9, comprenant :
i) un véhicule (12) doté d'au moins un pneumatique de véhicule (10),
ii) un dispositif de traitement de données électronique (18) doté d'une unité de stockage (16), et
iii) un capteur d'orientation (14) pour la détection de l'orientation dépendant du temps du véhicule (12) par rapport au champ magnétique terrestre ou à l'axe de rotation de la Terre,
le dispositif de traitement de données électronique (18) étant conçu pour corriger une information de profondeur de sculpture stockée pour le pneumatique de véhicule (10) du véhicule (12) sur l'unité de stockage (16) du dispositif de traitement de données électronique (18) en fonction de la variation de l'orientation du véhicule (12) détectée par le capteur d'orientation (14) au cours d'un intervalle de temps, le déplacement du véhicule (12) au cours de l'intervalle de temps comprenant une variation de l'orientation du véhicule (12) d'au moins 15°, de préférence d'au moins 30°, plus préférentiellement d'au moins 45°, par rapport à l'axe longitudinal du véhicule (12), la variation d'orientation ayant lieu à une vitesse moyenne du véhicule de 10 km/h ou moins, de préférence 5 km/h ou moins, plus préférentiellement 2,5 km/h ou moins, et la variation d'orientation ayant lieu lors d'une variation maximale de la position du centre de gravité du véhicule de 20 m ou moins, de préférence 10 m ou moins, plus préférentiellement 5 m ou moins.
